Europäisches Patentamt

European Patent Office

Office européen des brevets

(19)

(11) Veröffentlichungsnummer: **0 038 011**
**B1**

(12) EUROPÄISCHE PATENTSCHRIFT

(45) Veröffentlichungstag der Patentschrift: **28.11.84**

(51) Int. Cl.³: **F 23 K 1/04**, F 23 K 1/02

(21) Anmeldenummer: **81102608.7**

(22) Anmeldetag: **07.04.81**

(54) Brenner zum Verbrennen einer Kohle/Wasser-Suspension.

(30) Priorität: **14.04.80 DE 3014242**

(43) Veröffentlichungstag der Anmeldung:
**21.10.81 Patentblatt 81/42**

(45) Bekanntmachung des Hinweises auf die
Patenterteilung:
**28.11.84 Patentblatt 84/48**

(84) Benannte Vertragsstaaten:
**AT BE CH FR GB IT LI LU NL SE**

(56) Entgegenhaltungen:
**DE-A-1 551 707**
**DE-A-2 129 663**
**DE-B-1 279 883**
**DE-B-2 912 520**
**DE-C- 832 470**
**US-A-3 229 651**
**US-A-3 589 314**

**GLÜCKAUF, Band 109, Nr. 16, August 1973,**
**Seiten 830-834, Essen, DE., H. HAGEMANN et**
**al.: "Herstellung, Transport und Verbrennung**
**von Kohle/Wasser-Suspension im Kraftwerk"**

(73) Patentinhaber: **Kernforschungsanlage Jülich**
**Gesellschaft mit beschränkter Haftung**
**Postfach 1913**
**D-5170 Jülich (DE)**

(72) Erfinder: **Förster, Siegfried, Dr.**
**Ottenfeld 1**
**D-5110 Alsdorf (DE)**

## Beschreibung

Die Erfindung bezieht sich auf einen Brenner mit einer Zuleitung für eine Kohle/Wasser-Suspension. In die Zuleitung mündet ein erhitzte Verbrennungsluft in die Kohle/Wasser-Suspension einleitender Verbrennungsluftkanal.

Um Kohle mit vergleichbaren vorzügen wie sie flüssige oder gasförmige Brennstoffe aufweisen, transportieren und beim Verbrennungsprozeß handhaben zu können, ist es bekannt, Staubkohle mittels Wasser in Rohrleitungen zu befördern und als Kohle/Wasser-Suspension in Wärmeerzeugungsanlagen zu verbrennen, vgl. Hagemann u.a., "Herstellung, Transport und Verbrennung von Kohle/Wasser-Suspension im Kraftwerk", Zeitschrift "Glückauf", 1973, Seiten 830 ff. Bei einer direkten Verbrennung ist die Beschaffenheit der Kohle/Wasser-Suspension von entscheidender Bedeutung, soll sowohl die Förderung der Kohle als auch die Verbrennung der Kohle/Wasser-Suspension optimal erfolgen. Zur Verteilung der Suspension im Brennraum werden Zerstäuber verwendet, die jedoch beim Durchsatz der Kohle/Wasser-Suspension einem hohen Verschleiß ausgesetzt sind. Bewährt haben sich Rotationszerstäuber, deren Zerstäuberbecher mit Drehzahlen von rd. 6000 Umdrehungen pro Minute rotieren. Auch wurden thermische Druckzerstäuber eingesetzt, denen die Kohle/Wasser-Suspension unter Druck und bis nahe an die Sattdampftemperatur erhitzt zugeführt wird. Diese Erwärmung der Suspension bis zu einer Temperatur im Bereich zwischen 150°C und 200°C führt zu Ausscheidungen, die sich an den Wänden der Wärmetauscher und den nachfolgenden Aggregaten niederschlagen und den Prozess beeinträchtigen. Bekannt ist es, die Kohle/Wasser-Suspension in Dampfwärmetauschern zu erhitzen. Jedoch erhöht sich dabei in unerwünschter Weise der Wassergehalt in der Suspension, was zu Wärmeverlusten führt. Nachteilig ist auch, daß erhebliche Reste an brennbarem Gut nicht umgesetzt werden und im Abgas verbleiben.

Bekannt ist auch das Einführen erhitzter Luft vor Verbrennung der Kohle/Wasser-Suspension, vgl. US—A—3 229 651 sowie DE—B—1 279 883. Die zugeführte Luft verdampft das Wasser in der Suspension und dient zugleich als Verbrennungsluft. Das gebildete Kohlestaub/Wasserdampf/Luft-Gemisch wirkt stark erosiv. Bei Auslegung der das Gemisch fördernden Aggregate muß dieser Beanspruchung Rechnung getragen werden.

Aufgabe der Erfindung ist es, einen Brenner anzugeben, bei dem in die Kohle/Wasser-Suspension erhitzte Luft als Verbrennungsluft bei verminderter Beanspruchung der Brennerteile einbringbar ist.

Diese Aufgabe wird bei einem Brenner der eingangs angegebenen Art gemäß der Erfindung durch die im Patentanspruch 1 angegebene Ausbildung gelöst.

In die Zuleitung für die Kohle/Wasser-Suspension mündet vor dem Brennermund ein Verbrennungsluftkanal mit erhitzter Verbrennungsluft. Der Strömungsraum der Zuleitung ist vom Verbrennungsluftkanal an der Mündungsstelle durch einen für die Verbrennungsluft durchlässigen porösen Wandteil getrennt. Zum Einblasen von Verbrennungsluft in die Kohle/Wasser-Suspension wird der Druck im Verbrennungsluftkanal in Abhängigkeit von der in der Zuleitung geförderten Suspensionsmenge in gewünschter Weise so reguliert, daß am Brennermund ein zündfähiges, stöchiometrisch verbrennendes Kohlenstaub/Wasserdampf/Luft-Gemisch ausströmt. Um bei Eintritt der Verbrennungsluft in die Zuleitung der starken Expansion des Kohlenstaub/Wasserdampf/Luft-Gemisches Rechnung zu tragen, erweitert sich der Strömungsquerschnitt der Zuleitung an der Mündungsstelle in Strömungsrichtung der Suspension.

Bevorzugt ist sowohl die Zuleitung für die Kohle/Wasser-Suspension als auch der Verbrennungsluftkanal an einem Rekuperator angeschlossen, der die in den Leitungen geführten Medien im Wärmeaustausch mit vom Brennraum abströmenden Abgas erwärmt, Patentanspruch 2.

Die Erfindung wird anhand eines Ausführungsbeispiels, das in der Zeichnung schematisch wiedergegeben ist, näher erläutert. Es zeigen im einzelnen:

Figur 1 Längsschnitt durch einen Brenner für Kohle/Wasser-Suspension mit einem trichterförmig geöffneten Brennerkopf,

Figur 2 Querschnitt durch einen Brenner nach Figur 1 gemäß Schnittlinie II/II.

Der in der Zeichnung schematisch wiedergegebene, zylinderförmige Brenner für Kohle/Wasser-Suspension weist eine zum Brennermund 1 des Brenners geführte zentrale Zuleitung 2 für die Kohle/Wasser-Suspension auf, die an einer Wärmeaustauschzone 3 eines Rekuperators 4 angeschlossen ist. In der Wärmeaustauschzone wird die Kohle/Wasser-Suspension bis etwa zur Verdampfungstemperatur des Wassers erwärmt. Im Ausführungsbeispiel ist die Kohle/Wasser-Suspension bis zu einer Temperatur von 100°C erhitzbar.

Vor dem Brennermund 1 mündet in die Zuleitung 2 ein Verbrennungsluftkanal 5. An der Mündungsstelle, die im Ausführungsbeispiel trichterförmig geformt ist, sind poröse Wandteile 6 eingesetzt, die von der Verbrennungsluft durchströmbar sind. Die Verbrennungsluft wird in den Verbrennungsluftkanal 5 von einem Gebläse 7 gedrückt, das vor einer die Verbrennungsluft erhitzenden Wärmeaustauschzone 8 des Rekuperators 4 angeordnet ist.)[+] Die austrittstemperatur der Verbrennungsluft am

---

)[+] Die Verbrennungsluft strömt über einen Ringkanal 29 in den Rekuperator 4 ein.

Verbrennungsluftausgang 9 am Rekuperator 4 ist so bestimmt, daß die Wärmemenge der Verbrennungsluft, die durch die porösen Wandteile 6 hindurch zur Einstellung eines zündfähigen, Stöchiometrischen Kohlenstaub/Wasserdampf/Luft-Gemisches in die Kohle/Wasser-Suspension eingeführt wird, ausreichend ist, um das in der Kohle/Wasser-Suspension enthaltene Wasser vollständig zu verdampfen. Bei einer Temperatur der Kohle/Wasser-Suspension in der Zuleitung 2 von 100°C wird die in die Zuleitung 2 einströmende Verbrennungsluft zweckmäßig bis auf etwa 500°C erhitzt.

Im Ausführungsbeispiel ist der Strömungsquerschnitt der Zuleitung 2 am Brennermund 1 derart bemessen, daß das Kohlenstaub/Wasserdampf/Luft-Gemisch frei in den Brennraum eingeblasen werden kann. Zusätzliche Düsenplatten am Brennermund 1, die stark verschleißen, sind nicht erforderlich, Zuleitung 2 und Wandteile 6 sind aus keramischen Werkstoffen gefertigt. Sie lassen sich jedoch auch aus Metallen, die verschleißfeste Oberflächen aufweisen, oder unter Anwendung beider Werkstoffe, nämlich aus keramischen sowie metallischen Bauteilen ausbilden.

Der Trichterform der Mündungsstelle der Zuleitung 2 entsprechend weist der Brenner einen Brennerkopf 16 auf, der als zum Brennermund 1 hin geöffneter Trichter gestaltet ist. Ein in den trichterförmigen Brennerkopf 16 eingesetztes Kernstrück 17 ist derart geformt, daß für die Zuleitung 2, die das sich ausbildende Kohlenstaub/Wasserdampf/Luft-Gemisch zum Brennermund 1 führt, in Strömungsrichtung des Gemisches gesehen ein zunehmender Strömungsquerschnitt gebildet wird. Diese Ausgestaltung der Zuleitung 2 berücksichtigt die starke Expansion des Kohlenstaub/Wasserdampf/Luft-Gemisches infolge des verdampfenden Wassers bei Eintritt der Verbrennungsluft in die Zuleitung 2.

Um die Verbrennungsluft gleichmäßig über die Länge des Wandteiles 6 in die Zuleitung 2 einzuführen, verengt sich der Strömungsquerschnitt des Verbrennungsluftkanals 5 entsprechend der in die Zuleitung 2 entweichenden Verbrennungsluftmenge.

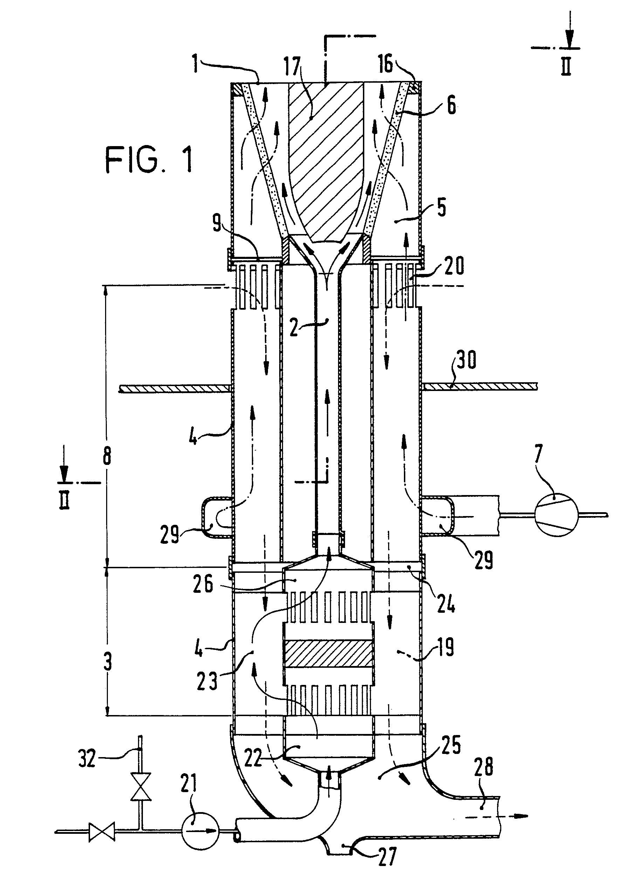

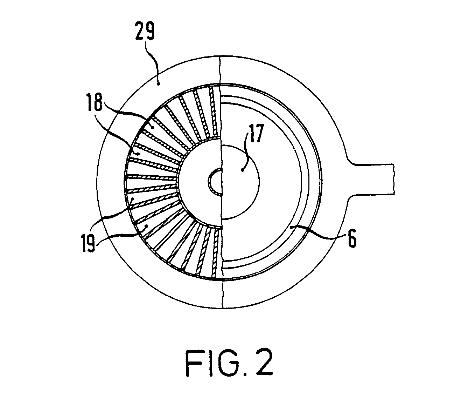

Der im Ausführungsbeispiel eingesetzte Rekuperator weist eine Vielzahl von parallel zueinander geführten Strömungskanälen mit schlitzförmigen Strömungsquerschnitten auf, die längs ihrer gestreckten Seiten benachbart angeordnet sind, wie aus dem in Figur 2 gezeigten Querschnitt ersichtlich ist. Im Ausführungsbeispiel strömt in Strömungskanälen 18 des Rekuperators 4 Verbrennungsluft, in Strömungskanälen 19 im Gegenstrom zur Verbrennungsluft Abgas, das am Abgaseinlaß 20 seitlich in den Rekuperator eintritt, vgl. Figur 1. Das Abgas durchströmt sowohl die Wärmeaustauschzone 8, in der die Verbrennungsluft erhitzt wird, als auch die Wärmeaustauschzone 3 des Rekuperators 4, die zur Erwärmung der Kohle/Wasser-Suspension dient. Die Kohle/Wasser-Suspension wird von einer Förderpumpe 21, im Ausführungsbeispiel einer Membranpumpe mit metallischer Membran, über eine Zuleitung 22 in fluchtend zu den Strömungskanälen 18 für Verbrennungsluft angeordnete Strömungskanäle 23 der Wärmeaustauschzone 3 geförder)+ Zwischen den Strömungskanälen 23 und den Strömungskanälen 18 sind die Wärmeaustauschzonen 3 und 8 trennende Zwischenwände 24 eingesetzt.

In der Wärmeaustauschzone 3 wird das Abgas bis unter die Taupunkttemperatur des Abgases abgekühlt. Am Ausgang 25 des Abgases am Ende des Rekuperators 4 ist aus diesem Grunde ein Kondensatabflüß 27 zu einer Auffangwanne für das Kondensat geführt, die in der Zeichnung nicht wiedergegeben ist. Eine Abgasleitung 28 dient zur Ableitung des Abgases.

Im Ausführungsbeispiel ragt der Brenner durch eine Brennraumwand 30 hindurch in einer in der Zeichnung nicht dargestellten Brennraum hinein. Der Abgaseinlaß 20 der Rekuperatoren befindet sich innerhalb des Brennraumes. Das Abgas kann daher nach Wärmeabgabe im Kesselraum in den Rekuperator einströmen.)+

Für den Kaltstart des Brenners sind die Kohle/Wasser-Suspension und die Verbrennungsluft mittels einer elektrischen Heizung auf die für die Bildung des zündfähigen Gemisches erforderliche Temperatur erhitzbar. Die elektrische Heizung ist in der Zeichnung nicht dargestellt. Sie ist lediglich für den Startvorgang erforderlich. Hat nach Zündung des Kohlenstaub/Wasserdampf/Luft-Gemisches das in die Rekuperatoren einströmende Abgas eine für die Aufheizung der Medien ausreichende Temperatur erreicht, wird die elektrische Heizung wieder abgestellt.

**Patentansprüche**

1. Brenner mit einer eine Kohle/Wasser-Suspension zum Brennermund führenden Zuleitung, in die ein erhitzte Verbrennungsluft in die Kohle/Wasser-Suspension einleitender Verbrennungsluftkanal mündet, dadurch gekennzeichnet, daß die Mündungsstelle von einem Wandteil (6) aus für die Verbrennungsluft durchlässigem, porösen Werkstoff verschlossen ist und daß die Zuleitung (2) zumindest in dem Bereich, in dem die Verbrennungsluft in die Zuleitung (2) einströmt, einen zum Brennermund (1) hin zunehmenden Strömungsquerschnitt aufweist.

---

)+ und strömt aus Austritt 26 auf etwa 100°C erleitet in die Zuleitung 2.

)+ Zum Reinigen der die Kohle/Wasser-Suspension führenden Bauteile des Brenners werden diese in Zeitlichen Abständen mit Wasser gespült. Zu diesem Zweck ist die Förderpumpe 21 an eine Wasserleitung 32 anschließbar.

2. Brenner nach Anspruch 1, dadurch gekennzeichnet, daß sowohl die Zuleitung (2) für die Kohle/Wasser-Suspension als auch der Verbrennungsluftkanal (5) an einen Rekuperator (4) angeschlossen sind, der die in den Leitungen (2, 5) geführten Medien im Wärmeaustausch mit Abgas erhitzt.

## Claims

1. Burner having a feed conduit which conducts a coal/water suspension to the burner mouth and into which there opens a combustion air duct which introduces heated combustion air into the coal/water suspension, characterised in that the region where the said duct debouches is closed by a wall portion (6) made of porous material previous to the combustion air, and that the feed conduit (2) comprises at least in the region in which the combustion air flows into the feed conduit (2) a flow cross-section which increases in the direction towards the burner mouth (1).

2. Burner according to claim 1, characterised in that both the feed conduit (2) for the coal/water suspension and also the combustion air duct (5) are connected to a recuperator (4) whereby the media conducted in the ducts (2, 5) are heated in heat exchange with exhaust gas.

## Revendications

1. Brûleur comprenant un conduit d'admission qui amène une suspension de charbon dans l'eau à l'orifice du brûleur et dans lequel débouche un canal pour de l'air de combustion destiné à introduire de l'air de combustion dans la suspension de charbon dans l'eau, caractérisé en ce que l'emplacement de l'embouchure est fermé par une partie formant cloison (6) en un matériau poreux perméable à l'air de combustion, et en ce que le conduit d'admission (2) présente au moins dans la région dans laquelle l'air de combustion s'écoule dans le conduit d'admission (2), une section transversale d'écoulement croissante en direction de l'orifice du brûleur (1).

2. Brûleur suivant la revendication 1, caractérisé en ce qu'aussi bien le conduit d'admission (2) pour la suspension de charbon dans l'eau, que le canal polaire de combustion (5) sont raccordés à un récupérateur (4) qui réchauffe par échange de chaleur avec du gaz résiduaire les milieux qui passent dans les conduits (2, 5).

**FIG. 1**

0038011

1

FIG. 2